# EUROPÄISCHE PATENTSCHRIFT

(11) **EP 1 927 071 B1**
(45) Veröffentlichungstag und Bekanntmachung des Hinweises auf die Patenterteilung: **14.01.2009**
(21) Anmeldenummer: 07820310.6
(22) Anmeldetag: 18.09.2007
(51) Int. Cl.: G06K 19/06

(54) **CODIERUNG BEIM BESCHRIFTEN MIT OPTISCH LESBAREN MARKIERUNGEN**
ENCODING WHEN LABELING WITH OPTICALLY READABLE LABELS
CODAGE LORS DE L'INSCRIPTION DE MARQUAGES POUVANT ÊTRE LUS DE MANIÈRE OPTIQUE

(30) Priorität: 18.09.2006 DE 102006045223; 21.09.2006 DE 102006045090
(43) Veröffentlichungstag der Anmeldung: 04.06.2008
(73) Patentinhaber: Vision Tools Hard- und Software Entwicklungs-GmbH, 68753 Waghäusel (DE)
(72) Erfinder: TROPF, Hermann, 68789 St. Leon-Rot (DE)
(74) Vertreter: Schneider, Günther Martin
(86) Internationale Anmeldenummer: PCT/EP2007/059861
(87) Internationale Veröffentlichungsnummer: WO 2008/034831

(56) Entgegenhaltungen:
- US-A- 5 221 833
- US-A- 5 245 165
- US-A- 6 076 738

## Beschreibung

Die Erfindung betrifft die Codierung beim Beschriften von Oberflächen mit optisch lesbaren Markierungen.

Aus US 6076738 ist ein Beschriftungsverfahren bekannt, nach dem digitale Werte vorbestimmter Länge n in ein maschinenlesbares Format auf einem Medium aufgebracht werden. Das Verfahren besteht aus den folgenden Schritten: Codieren der digitalen Werte in eine entsprechende Codierung mit 2 hoch n physisch unterschiedlichen, rotationsvarianten (Anspruch 1) oder rotationsinvarianten (Anspruch 4), individuell unterscheidbaren Formen ("glyph shapes") im wesentlichen mit gleichem Flächenbetrag, um einen Satz von untereinander unabhängigen Formen zu erzeugen, die entsprechend den digitalen Werten variieren. Diese Formen werden in vorbestimmter Reihenfolge und in vorbestimmtem Format auf das Medium geschrieben, um die digitalen Werte in einem selbstsynchronisierenden Code zu speichern.

### Als Beispiel für rotationsvariante strichförmige

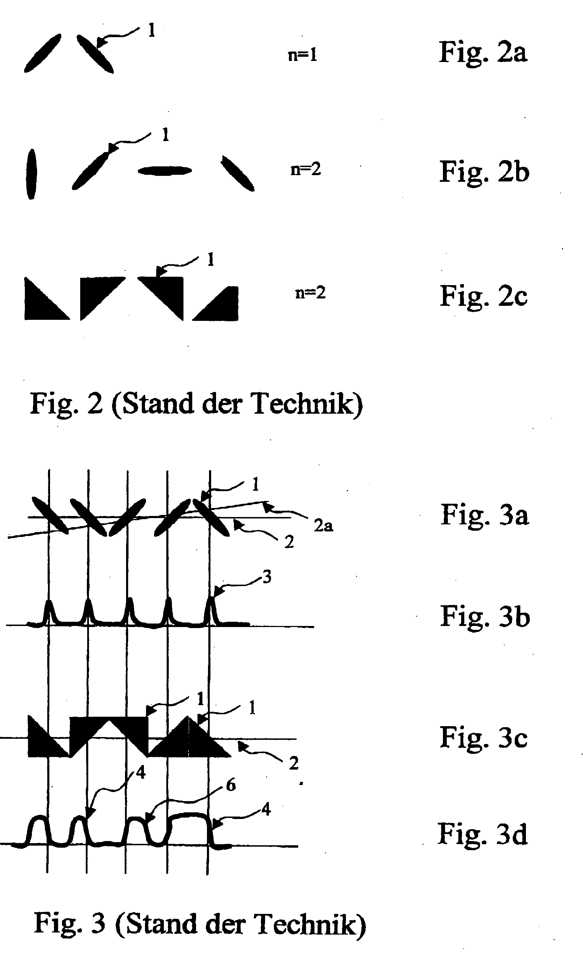

Glyphen 1 werden um +- 45 Grad gedrehte Striche aufgeführt, wie in Fig. 2a gezeigt. Hierbei ist n=1. Fig. 2b zeigt ein Beispiel mit 4 rotationsvarianten strichförmigen Glyphen 1, also mit n=2. Fig. 2c zeigt ein Beispiel mit 4 keilförmigen Glyphen, also n=2.

Nach US 5245165 werden keilförmige Glyphen nach Fig. 2b vorgeschlagen, in den vier (2 hoch 2) Drehlagen 0, 90, 180, 270 Grad relativ zu einer Referenzachse, um damit je 2 Bit zu codieren.

Solche Glyphen werden selbstsynchronisierend (self clocking) genannt, da sich an jeder Position ein Glyph befindet und damit die Synchroninformation in dem sich ergebenden Muster aus Glyphen enthalten ist.

Individuell unterscheidbare Formen werden im Folgenden Glyphen genannt, unabhängig davon, ob ihr Flächenbetrag im wesentlichen gleich ist oder nicht.

Das Finden der Glyph-Positionen und der Abtastrichtung ist bei Glyphen der oben genannten Art über eine Lauflängenanalyse möglich, wie aus Fig. 3 ersichtlich ist: Liegt eine versuchsweise gelegte Abtastlinie 2 genau in der Richtung der Anordnung der Symbole und geht sie genau durch die Mitte der Symbole, so ergeben sich bei Strichglyphen (Fig. 3a) im Abtastsignal äquidistante Peaks 3 (Fig. 3b zeigt den Helligkeitsverlauf entlang der Abtastlinie). Liegen Position oder Richtung der. Abtastlinie falsch, wie bei Abtastlinie 2a, so sind diese Peaks (nicht gezeichnet) nicht äquidistant.

Keilförmige Glyphen sind nach US 5245165 (s.o.) in einem gegenseitigen Abstand platziert. Fig. 3c zeigt solche Glyphen nach Fig. 2c, jedoch vorteilhaft ohne gegenseitigen Abstand. Fig. 3d zeigt den diesbezüglichen Helligkeitsverlauf. Äquidistant erscheinen Helligkeitssprünge an den mit senkrechten Linien gekennzeichneten Stellen 4. Zusätzliche Sprünge 6 treten an den Rändern der Glyphen auf, was die Lauflängenanalyse erschwert. Da hier, im Gegensatz zur o.g. US 5245165, die Glyphen keinen gegenseitigen Abstand haben, erscheinen die zusätzlichen Kantenübergänge genau in der Mitte zwischen den auszuwertenden Kantenübergängen, was die Lauflangenanalyse wiederum etwas vereinfacht.

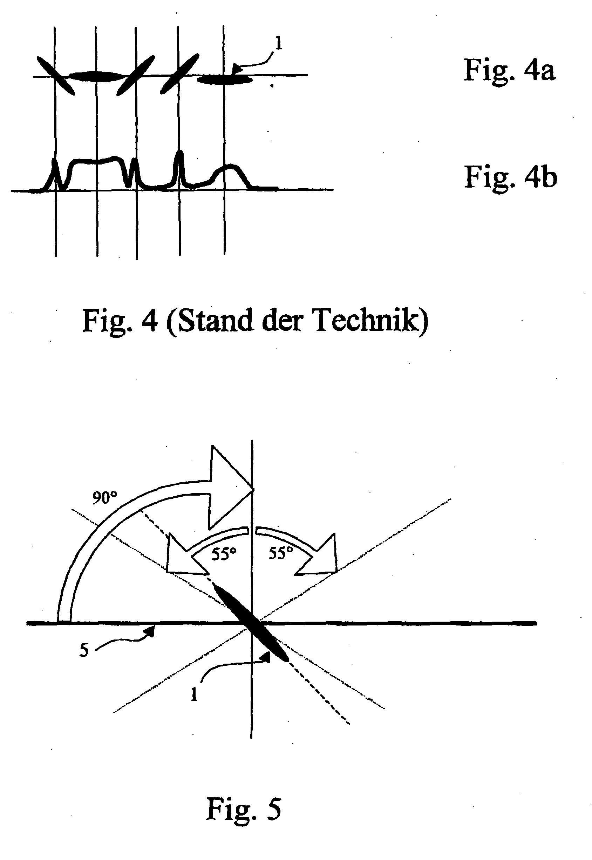

Diese genannten Vorteile bei der Synchronisierung verschwinden, wenn man die Informationsdichte entsprechend den o.g. US-Patenten erhöht:
Geht man bei Strichglyphen von 2 (n=1) über auf 4 (n=2), so erhält man Glyphen nach der in Fig. 4. dargestellten Form mit Glyphen, die teilweise in Abtastrichtung ausgerichtet sind und daher keine klaren Peaks mehr ergeben, wie aus Fig. 4 ersichtlich. Auch wenn man alle Glyphen um 22,5 Grad gegen die Abtastrichtung dreht, werden die Peaks zunehmend unscharf, da die Äbtastlinie zunehmend parallel zu der Glyph-Richtung verlaufen muss. Bei noch höherer Informationsdichte werden diese Nachteile noch gravierender.

Entsprechendes gilt, wenn man bei Keilglyphen die Informationsdichte von 4 (n=2) auf 8 (n-3) erhöht.

Mit Zunahme der Informationsdichte leidet nach bekannter Technik die Synchronisierbarkeit. Zusätzlich wird die Unterscheidung der Glyphen schwieriger.

Aus DE 101 09 705 C2 ist eine Codierung beim verformenden Beschriften bekannt, insbesondere für geritzte Markierung, mit Geradenstücken unterschiedlicher Richtung, die sich bezogen auf eine Arbeitsrichtung um nicht mehr als 20 Grad unterscheiden. Mit dieser Codierungsmethode sind insbesondere geritzte Striche mit einfachen Mitteln sicher kontrastreich darstellbar, doch ist die Informationsdichte durch den dadurch sehr engen Winkelbereich sehr beschränkt.

Aus der Nachrichtentechnik ist die differentielle Codierung von Informationen bekannt. Bei differentieller Phasenmodulation beispielsweise steckt die Information in der Phasendifferenz aufeinanderfolgender Symbole.

Aus DE 10 2004 038 601 ist ein Codierungsverfahren bekannt, das auch für das Beschriften von Oberflächen geeignet ist, mit schrittweiser Inversion schrittspezifischer, sog. Inversionszellen, mit dem Vorteil, dass das Decodieren durch Mehrheitsentscheidungen über Vergleiche von Zellinhalten möglich ist.

US 5 221 833 betrifft ein Verfahren gemäß dem Oberbegriff des Anspruchs 1.

Aufgabe der Erfindung ist eine Codierung bereitzustellen zum Beschriften von Oberflächen mit optisch lesbaren Markierungen, die ein sicheres Synchronisieren und eine sichere Symbolinterpretation bei hoher Informationsdichte gestattet.

Diese Aufgabe wird nach Anspruch 1 gelöst.

Erfindungsgemäß wird eine ungerade Anzahl p unterscheidbarer Glyphen 1 verwendet, deren Strichrichtung durch eine Referenzlinie 5 hindurchgeht innerhalb eines Winkelbereichs von 90 Grad +- 55 Grad. Dadurch wird auch bei hoher Informationsdichte eine sichere Selbstsynchronisation durch das Signal entlang einer Abtastlinie 2 sichergestellt.

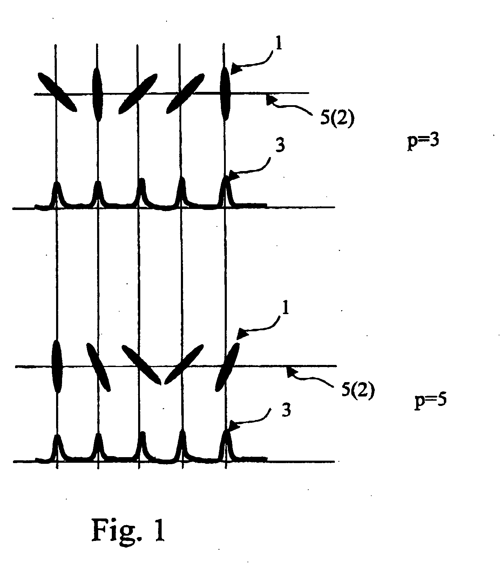

Fig. 1 zeigt oben ein Beispiel mit p=3, unten ein Beispiel mit p=5. Fig. 5 zeigt den Winkelbereich von 90 +-55 Grad zwischen der Glyph-Richtung und Abtastlinie 1. In Fig. 1 und 5 fallen Abtastlinie 2 und Referenzlinie 5 zusammen.

Zum Synchronisieren werden versuchsweise Abtastlinien gelegt. Fällt eine Abtastlinie mit einer Referenzlinie zusammen, so ergeben sich äquidistante Peaks.

Eine ungerade Anzahl unterscheidbarer Glyphen bietet den Vorteil der symmetrischen Verteilung der Richtungen um die synchronisationstechnisch optimalen 90 Grad herum.

Ist die digitale Gesamt-Information in binärer Form (Basis 2) gegeben, z.B. als Folge aus Ziffern "0" und "1", so kann man diese Information - oder blockweise Teile davon - einfach als Binärzahl interpretieren und diese in eine ternäre Zahl (Basis 3) wandeln, z.B. als Folge aus Ziffern "0", "1" und "2". Diese Ziffern sind nun Ausgangspunkt für eine Codierung mit 3 möglichen unterscheidbaren Glyphen. Bei der Decodierung geht man entsprechend umgekehrt vor. Entsprechendes gilt natürlich für alle anderen möglichen ungeraden Basen.

Mit zunehmender Informationsdichte (p=3, 5, 7, ...), d.h. mit kleiner werdenden Richtungsunterschieden, wird die Interpretation, d-h. die Unterscheidung der Glyphen schwieriger. Durch das Verbot, Glyphen parallel zur Referenzlinie zu orientieren, wird zwar die Synchronisierung erleichtert, jedoch leidet unter den enger werdenden Richtungsunterschiede die Unterscheidbarkeit der Glyphen. Dem wirkt nun die folgende erfindungsgemäße Ausgestaltung entgegen:
Nach einer speziellen Ausgestaltung wird die Information differentiell codiert, indem die Information jeweils in den Neigungsunterschied nah benachbarter, vorzugsweise direkt benachbarter Glyphen verbracht wird.

Vorteil ist, dass insbesondere bei verformender Markierung, nah benachbarte, gleiche Symbole, eine ähnliche Erscheinungsform aufweisen, unabhängig von Beleuchtungs- und Betrachtungsgeometrie. Bei dieser Codierungsweise können Variationen - durch Effekte wie verschiedenartige Oberflächen, Markierungstiefen, Mikrostruktur der Oberfläche oder der Beschriftung (bei Laserbeschriftung wichtig) oder der Aufnahmegeometrie - beim Decodieren automatisch herausgerechnet werden; der Effekt ist bei direkt benachbarten Glyphen am deutlichsten:
Zur Berechnung des Neigungsunterschieds wird vorteilhaft das Bild eines von zwei benachbarten Glyphen rechnerisch in p Stufen verdreht (einschließlich Nulldrehung), entsprechend der bekannten Winkelquantisierung, und jeweils ein Bildvergleich des unverdrehten mit dem verdrehten Bild realisiert. Die Verdrehungsstufe, bei der die Bilder am ähnlichsten sind, ist der gesuchte Neigungsunterschied (vorteilhaft modulo p betrachtet).

Bei dieser Vorgehensweise rechnen sich vorteilhaft alle o.g. Effekte automatisch heraus.

Durch die Kombination einer ungeraden Anzahl von Glyphen unterschiedlicher Strich- bzw. Kantenrichtung, mit Codierung durch Richtungsunterschiede gelingt eine sichere Erkennung, d.h. Synchronisation und Interpretation der Glyphen, auch bei hoher Informationsdichte, d.h. bei kleinen Winkelunterschieden. Die über Richtungsunterschieds-Decodierung gewonnene Robustheit wirkt der zugunsten einer sicheren Synchronisation etwas verringerten Unterscheidbarkeit (etwas kleinere Richtungsunterschiede) entgegen.

Die Referenzlinie bzw. Abtastlinie ist i.A. eine Gerade, sie kann auch gekrümmt sein, insbesondere kann sie auch eine Kreisbahn sein. Über mehrere parallel geführte Referenzlinien entsteht ein 2D-Code.

Die Positionen der Glyphen auf der Abtastlinie sind i.A. äquidistant. Grundsätzlich können auch vorab bekannte, nicht äquidistante Verhältnisse vorherrschen, womit ebenso eine Synchronisierung ermöglicht wird.

Grundsätzlich kann auch durch absichtliche (bevorzugt geringfügige) Abweichungen von einer äquidistanten bzw. vorgegeben nichtäquidistanten Platzierung zusätzliche Information codiert werden.

Die Methode kann natürlich jedem bekannten höheren Codierüngsverfahren, insbesondere mit Vorwärtskorrektur, nachgeschaltet werden, und wird dementsprechend beim Decodieren vorgeschaltet (Verkettete Codierung).

## Patentansprüche

1. Codierverfahren für optisch lesbare Markierungen von Oberflächen, bei dem digitale Werte durch rotationsvariante, individuell unterscheidbare strichförmige Glyphen (1), die entlang einer Referenzlinie (5) angeordnet sind, codiert werden,
**dadurch gekennzeichnet,**
**dass** die digitalen Werte durch eine ungerade Anzahl unterscheidbarer Glyphen dargestellt werden, deren Strichrichtung durch die Referenzlinie (5) hindurchgeht innerhalb eines Winkelbereichs von 90 Grad +- 55 Grad.

2. Codierverfahren nach Anspruch 1, **dadurch gekennzeichnet, dass** die codierte
Information im Richtungsunterschied nah benachbarter, vorzugsweise direkt benachbarter Glyphen liegt.

## Claims

1. Encoding method for optically readable markers of surfaces, wherein digital values are encoded by rotation-variant, individually discriminable, line-shaped glyphs (1), which are aligned along a reference line (5),
**characterized in that**
the digital values are represented by an odd number of discriminable glyphs, whose line direction passes through the referenced line (5) within an angular range of 90 degrees ± 55 degrees.

2. The encoding method according to claim 1, **characterized in that** the encoded information is in the directional difference of closely adjacent, preferably directly adjacent glyphs.

## Revendications

1. Une méthode de codage pour des marquages des surfaces optiquement lisible, où des valeurs numériques sont codées par des glyphes (1) en forme de traits, variants par rotation et individuellement discriminables, les glyphes étant alignés le long d'une ligne de référence (5),
**caractérisée en ce que**
les valeurs numériques sont représentées par un nombre impair des glyphes discriminable, dont la direction de trait passe par la ligne de référence (5) en l'espace angulaire de 90 degrés ± 55 degrés.

2. La méthode de codage selon la revendication 1, **caractérisée en ce que** l'information codée est située dans la différence directionnelle de glyphes voisins, préférablement de glyphes directement voisins.
